# EUROPÄISCHE PATENTSCHRIFT

(11) **EP 3 975 033 B1**
(45) Veröffentlichungstag und Bekanntmachung des Hinweises auf die Patenterteilung: **05.06.2024**
(21) Anmeldenummer: 21194852.6
(22) Anmeldetag: 03.09.2021
(51) Int. Cl.: G06K 7/12, G06K 7/016

(54) **VERFAHREN UND VORRICHTUNG ZUR DETEKTION EINER AUF EINEM UNTERGRUND ERZEUGTEN GRAFISCHEN DARSTELLUNG**
METHOD AND DEVICE FOR DETECTING A GRAPHIC REPRESENTATION GENERATED ON A SUBSTRATE
PROCÉDÉ ET DISPOSITIF DE DÉTECTION D'UNE REPRÉSENTATION GRAPHIQUE GÉNÉRÉE SUR UN SUBSTRAT

(30) Priorität: 28.09.2020 DE 102020212199
(43) Veröffentlichungstag der Anmeldung: 30.03.2022
(73) Patentinhaber: Pepperl+Fuchs SE, 68307 Mannheim (DE)
(72) Erfinder: Kirsch, Martin, 68542 Heddesheim (DE)
(74) Vertreter: Ullrich & Naumann PartG mbB

(56) Entgegenhaltungen:
- EP-A1- 1 237 128
- EP-A2- 1 569 178
- US-B1- 9 563 798

## Beschreibung

Die Erfindung betrifft ein Verfahren sowie eine Vorrichtung zur Detektion einer auf einem Untergrund erzeugten grafischen Darstellung, wobei die grafische Darstellung mittels einer Substanz erzeugt ist, bei der eine Remission durch die Substanz auch noch nach einer für die Detektion geeigneten und die Remission auslösenden Beleuchtung stattfindet.

Verfahren und Vorrichtungen der eingangs genannten Art sind aus der Praxis bekannt und existieren in unterschiedlichen Ausführungsformen. Beispielsweise ist es bekannt, eine grafische Darstellung in Form eines Codes auf einem Untergrund in Form von Papier zu erzeugen, wobei als Substanz für die Erzeugung der grafischen Darstellung in Form des Codes eine UV-Tinte, Ultraviolett-Tinte, verwendet wird, wobei der Code mit der UV-Tinte auf beispielsweise ein Bild gedruckt wird und dieses Bild dadurch überlagert. Der Effekt einer derartigen UV-Tinte besteht darin, dass der mit dieser UV-Tinte gedruckte Code unter normaler Beleuchtung nicht detektierbar bzw. nicht zu sehen ist. Wenn der Code mit UV-Licht beleuchtet wird, fängt er in einer typischen Farbe an zu leuchten, beispielsweise pink, welche eine andere Wellenlänge als das UV-Licht hat. Dieses durch die Beleuchtung mit UV-Licht erzeugte Leuchten endet nicht mit dem Beenden der Beleuchtung. Es tritt üblicherweise eine noch wahrnehmbare Relaxation bzw. Remission bzw. ein noch wahrnehmbares Nachleuchten der durch das UV-Licht angeregten Substanz auch nach Abschalten der Beleuchtung auf.

Bei einer Detektion des Codes durch eine Aufnahme der Remission unter UV-Licht tritt das Problem auf, dass auch der üblicherweise verwendete Weißmacher des Papiers auf die Beleuchtung mit dem UV-Licht reagiert und hell im blauen Bereich leuchtet. Dies führt zu extremen Problemen bei der Detektion und Dekodierung des Codes, da je nach hinterlegtem Bild oder Druck, beispielsweise ein mit einem typischen CMYK-Druckprozess erzeugtes oder gedrucktes Bild, ebenfalls ein Muster entstehen kann, das mit dem Muster des Codes nichts zu tun hat. In der Regel ist der Kontrasthub bei dem Weißmacher sogar größer als bei der UV-Tinte. Hierdurch ist die Lesbarkeit des Codes nicht mehr in jeder Situation gewährleistet.

Bei aktuellen Verfahren wird das obige Problem dadurch gelöst, dass das Hintergrundmuster des Bilds oder Drucks an der Stelle des Codes in aufwendiger Weise ausgespart wird. Alternativ oder zusätzlich hierzu können teure extrem schmalbandige Filter eingesetzt werden, um nur das Remissionsspektrum der UV-Tinte für eine Detektion oder Aufnahme mittels eines geeigneten Detektors durchzulassen.

Aus der US 9 563 798 B1 sind ein Verfahren und eine Vorrichtung zur Detektion einer auf einem Untergrund erzeugten grafischen Darstellung bekannt, wobei die grafische Darstellung mittels einer Substanz erzeugt ist, bei der eine Remission durch die Substanz auch noch nach einer für die Detektion geeigneten und die Remission auslösenden Beleuchtung stattfindet. Das bekannte Verfahren weist die folgenden Schritte auf: Belichten der grafischen Darstellung mit der Beleuchtung während eines vorgebbaren Zeitintervalls und Aufnehmen der durch die Beleuchtung erzeugten Remission mittels eines Detektors, wobei der Beginn des Aufnehmens mit oder nach dem Beginn des Zeitintervalls beginnt und nach dem Ende des Zeitintervalls endet.

Die EP 1 237 128 A1 zeigt ebenfalls ein Verfahren und eine Vorrichtung zur Detektion einer auf einem Untergrund erzeugten grafischen Darstellung bekannt. Dabei ist im Konkreten ein Subtrahieren von Intensitätswerten aus unterschiedlichen Zeitintervallen offenbart.

Aus der EP 1 569 178 A2 sind auch ein Verfahren und eine Vorrichtung zur Detektion einer auf einem Untergrund erzeugten grafischen Darstellung bekannt. Dabei wird eine Begrenzungseinheit für Lichtstrahlung zu der grafischen Darstellung eingesetzt.

Der vorliegenden Erfindung liegt die Aufgabe zugrunde, ein Verfahren sowie eine Vorrichtung zur Detektion einer auf einem Untergrund erzeugten grafischen Darstellung anzugeben, wonach eine sichere Detektion der grafischen Darstellung mit konstruktiv einfachen und kostengünstigen Mitteln ermöglicht ist.

Erfindungsgemäß wird die voranstehende Aufgabe durch ein Verfahren mit den Merkmalen des Anspruchs 1 sowie durch eine Vorrichtung mit den Merkmalen des Anspruchs 15 gelöst.

Bei dem erfindungsgemäßen Verfahren erfolgt ein Belichten der grafischen Darstellung mit der Beleuchtung während eines vorgebbaren Zeitintervalls. Ein Aufnehmen der durch die Beleuchtung erzeugten Remission erfolgt mittels eines Detektors, wobei der Beginn des Aufnehmens gleichzeitig mit dem Beginn des Zeitintervalls und damit mit dem Beginn der Beleuchtung oder alternativ hierzu nach dem Beginn des Zeitintervalls und damit nach dem Beginn der Beleuchtung erfolgt, aber erst nach dem Ende des Zeitintervalls und damit nach dem Ende der Beleuchtung endet. Dies bringt den Vorteil, dass nach dem Ende der Beleuchtung nur noch die auch noch nach Abschaltung oder Ende der Beleuchtung stattfindende Remission der Substanz und kein zusätzliches Leuchten beispielsweise eines Weißmachers eines Papiers aufgenommen wird, das üblicherweise im Wesentlichen direkt nach dem Ende der Beleuchtung aufhört oder im Verhältnis zur Remission der Substanz sehr kurz ist und daher meist vernachlässigt werden kann. Diese Menge an Remission, die nach Abschaltung oder Ende der Beleuchtung aufgenommen wird, kann auf einfache Weise zur Detektion der grafischen Darstellung verwendet werden. Die während der Beleuchtung bis zum Ende der Beleuchtung aufgenommene Menge an Remission kann vernachlässigt oder vom insgesamt aufgenommenen Signal oder von der insgesamt aufgenommenen Menge an Remission abgezogen werden, damit ausschließlich das nach Abschaltung oder Ende der Beleuchtung aufgenommene Signal genutzt werden kann, um die grafische Darstellung zu detektieren. Ein Leuchten eines Weißmachers kann hierdurch einfach "ausgeblendet" werden.

Mit dem erfindungsgemäßen Verfahren wird lediglich die Aufnahmezeit in geschickter Weise gestaltet und sind keine teuren extrem schmalbandigen Filter für die Detektion erforderlich. Ein hinter der grafischen Darstellung erzeugter Druck verliert an Relevanz oder wird völlig irrelevant.

Folglich sind mit dem erfindungsgemäßen Verfahren und der erfindungsgemäßen Vorrichtung ein Verfahren und eine Vorrichtung bereitgestellt, wonach eine sichere Detektion der grafischen Darstellung mit konstruktiv einfachen und kostengünstigen Mitteln ermöglicht ist.

Im Hinblick auf eine besonders sichere und individuelle Ausgestaltung und im Rahmen einer konkreten Anwendung kann die Substanz eine detektierbare Remission nur bei einer Beleuchtung mit Licht mit kürzeren Wellenlängen als das für den Menschen sichtbare Licht zeigen. Bei einer Beleuchtung mit beispielsweise üblichem Tageslicht oder für den Menschen sichtbarem Licht erfolgt keine oder zumindest keine signifikante Remission der Substanz.

Hinsichtlich einer besonders einfachen Ausgestaltung des Verfahrens oder der Vorrichtung kann die Substanz eine unter UV-Licht leuchtende Substanz oder Tinte sein. Derartige Substanzen oder Tinten sind aus der Praxis bekannt und existieren in unterschiedlichen Ausführungsformen.

Abgestimmt auf die für die Erzeugung der grafischen Darstellung verwendeten Substanz kann die Beleuchtung auf einfache Weise mittels UV-Licht, vorzugsweise in einem Wellenlängenbereich von unterhalb 400 nm und weiter vorzugsweise unterhalb 380 nm, erfolgen. Hierdurch ist eine sichere Erzeugung einer zur Detektion geeigneten Remission durch die Substanz gewährleistet. Einrichtungen zur Erzeugung eines geeigneten UV-Lichts mit einer Emission in einem für die Erzeugung einer Remission durch die Substanz geeigneten Wellenlängenbereich sind ebenfalls aus der Praxis bekannt und existieren in unterschiedlichen Ausführungsformen.

Im Konkreten kann die Remission ein Fluoreszenzlicht aufweisen. Ein derartiges Fluoreszenzlicht kann mit geeigneten Detektoren sicher detektiert werden.

Im Hinblick auf eine besonders sichere Detektion der grafischen Darstellung kann das Aufnehmen der Remission erst nach und vorzugsweise unmittelbar nach dem Ende des Zeitintervalls beginnt. Dies bietet den Vorteil, dass keine zusätzliche, die Detektion störende Remission von einem Weißmacher eines Papiers mit aufgenommen wird, sodass ausschließlich das für die Detektion der grafischen Darstellung bedeutsame Remissionssignal bzw. ausschließlich die für die Detektion der grafischen Darstellung bedeutsame Menge an Licht von dem Detektor aufgenommen wird, da ein Weißmacher nach einem Abschalten einer Beleuchtung nicht mehr nachleuchtet. Ein optimiertes Aufnehmen der Remission ist dann gewährleistet, wenn das Aufnehmen unmittelbar nach dem Ende des Zeitintervalls beginnt, da zu diesem Zeitpunkt das Remissionssignal der Substanz am stärksten ist und somit für die Detektion wertvolle Signalmenge mit dem Detektor gesammelt werden kann. Nach dem Ende der Beleuchtung lässt die Remission der Substanz üblicherweise mit der Zeit nach.

Da das nach dem Abschalten der Beleuchtung erzeugte Remissionssignal bzw. Nachleuchten der Substanz üblicherweise nicht sehr stark ist, was eine Detektion der grafischen Darstellung erschwert, wird die grafische Darstellung in besonders vorteilhafter und sicherer Weise während mehrerer vorgebbarer aufeinander folgender Zeitintervalle belichtet, wobei zwischen den Zeitintervallen Belichtungspausen vorgebbarer Zeitdauer zum Aufnehmen der Remission erfolgen. Dabei werden die Belichtungspausen genutzt, um eine ausreichende Menge an Remissionssignal im Detektor anzusammeln. Je nach Anwendungsfall und individueller, von der Substanz abhängiger Remissionsintensität kann die Anzahl der aufeinanderfolgenden Zeitintervalle für die Belichtung der Substanz gewählt werden. In manchen Fällen genügen möglicherweise zwei oder drei Zeitintervalle, wohingegen in anderen Fällen noch mehr Zeitintervalle zur Belichtung verwendet werden müssen, um eine für eine sichere Detektion der grafischen Darstellung ausreichende Menge an Remissionssignal anzusammeln. Mittels dieser Technik der Verwendung mehrerer Zeitintervalle für die Beleuchtung ist man bei der Detektion der grafischen Darstellung nicht mehr auf das unmittelbar nach der ersten Beleuchtung erzeugte Remissionssignal angewiesen. Dies ist insbesondere bei schwierigen Detektionsbedingungen vorteilhaft, bei denen möglicherweise in der Umgebung des Detektors und/oder der grafischen Darstellung unregelmäßige oder regelmäßige Störsignale erzeugt werden, die möglicherweise genau das nach der ersten Beleuchtung erzeugte Remissionssignal verfälschen oder dessen Wahrnehmung behindern.

Weiterhin im Hinblick auf ein besonders sicheres Detektieren der grafischen Darstellung erfolgt das Aufnehmen in Belichtungspausen.

Im Hinblick auf eine besonders sichere Detektion kann das Aufnehmen ausschließlich in Belichtungspausen, vorzugsweise während der gesamten Zeitdauern der Belichtungspausen, erfolgen. Hierdurch ist gewährleistet, dass beispielsweise ein für die Detektion der grafischen Darstellung nicht erforderliches und sogar störendes Leuchten eines Weißmachers eines Papiers, das nur während des Belichtens auftritt, erst gar nicht aufgenommen wird und damit beispielsweise nicht nachträglich diskriminiert oder vom in Belichtungspausen auftretenden Remissionssignal der Substanz für eine Auswertung abgezogen werden muss. Im Hinblick auf eine möglichst optimale Menge an aufgenommenem Remissionssignal oder aufgenommener Remission kann ein Aufnehmen während der gesamten Zeitdauern der Belichtungspausen stattfinden. Hierdurch kann quasi die maximale Signalmenge aufgenommen werden.

Weiterhin im Hinblick auf eine besonders sichere und auch einfache Detektion der grafischen Darstellung kann ein Auslesen des Detektors nach dem Aufnehmen erfolgen. Das kann insbesondere bedeuten, dass bei mehreren Zeitintervallen des Belichtens der grafischen Darstellung mit dazwischenliegenden Belichtungspausen ein Auslesen des Detektors und/oder ein Auswerteprozess erst ganz am Ende erfolgt, nachdem das Aufnehmen der Remission der grafischen Darstellung - auch in mehreren Belichtungspausen - insgesamt beendet ist. Zu diesem Zeitpunkt steht dann eine besonders große Menge an aufgenommenem Remissionssignal oder aufgenommener Remission der Substanz zur Verfügung, sodass eine besonders einfache und sichere Detektion ermöglicht wird.

Die Sicherheit und auch Empfindlichkeit der Detektion wird grundsätzlich dann besonders hoch, wenn nur eine Remission oder Remissionen ausgelesen wird oder werden, die außerhalb eines Zeitintervalls oder von Zeitintervallen des Belichtens aufgenommen worden ist oder sind. Insoweit kann ein spezifisches Auslesen erfolgen, das Remissionen und sonstige Leuchtereignisse wie beispielsweise ein Leuchten eines Weißmachers eines Papiers während der Zeitintervalle des Belichtens nicht berücksichtigt. Auch mit dieser Ausgestaltung des Verfahrens kann eine besonders hohe Sicherheit und Empfindlichkeit der Detektion erreicht werden, da im Ausleseprozess nur in Belichtungspausen stattfindende Remissionen der Substanz berücksichtigt werden.

Im Hinblick auf eine konstruktiv besonders einfache Ausgestaltung der erfindungsgemäßen Vorrichtung und damit auch im Hinblick auf eine besonders einfache Verfahrensdurchführung kann der Detektor einen CCD-Sensor, eine CCD-Kamera oder einen Sensorchip mit Multishutter-Funktion aufweisen. Mit derartig ausgestalteten Detektoren kann insbesondere ein einfaches Ansammeln von Remissionssignalen - insbesondere pro Pixel - erfolgen. Hierbei kann ein Ansammeln von Ladung erfolgen, deren Menge der Menge an Remission entspricht.

Grundsätzlich kann der Detektor ebenfalls in vorteilhafter Weise einen CMOS-Aufnehmer aufweisen. Ein derartiger Active Pixel Sensor, APS, bildet einen besonders geeigneten Halbleiterdetektor als Detektor. Alternativ hierzu kann der Detektor einen passiven Pixelsensor aufweisen.

Bei einer konkreten Ausführung der Erfindung kann die grafische Darstellung flächig ausgebildet sein, vorzugsweise auf einem als Papier ausgebildeten Untergrund. Dabei kann die grafische Darstellung mittels eines Druckprozesses, vorzugsweise auf Papier, erzeugt werden. Es sind jedoch auch andere Untergrundmaterialien denkbar.

Im Hinblick auf ein besonders bedeutsames Ausführungsbeispiel kann die grafische Darstellung einen Code, beispielsweise Barcode, QR-Code oder Data-Matrixcode, aufweisen oder als ein solcher Code ausgebildet sein. Mittels derartiger Codes können geeignete Informationen übermittelt werden, sodass nach der Detektion eines derartigen Codes ein Ausleseprozess hinsichtlich des Codes und gegebenenfalls eine dem Codeinhalt entsprechende Reaktion einer verbundenen Steuerung oder Gerätschaft erfolgen kann.

Mit dem erfindungsgemäßen Verfahren und der erfindungsgemäßen Vorrichtung wird die Lesbarkeit einer grafischen Darstellung in Form beispielsweise eines Codes erhöht, welcher mit unter UV-Licht leuchtender Tinte auf beispielsweise einem üblichen Druck oder CMYK-Druck gedruckt wurde. Dabei kann die grafische Darstellung problemlos auf einem hinsichtlich seiner Zusammensetzung unbekannten Druck erzeugt werden, da eine Detektion der grafischen Darstellung auch dann ermöglicht ist, wenn der unter oder hinter der grafischen Darstellung befindliche Druck während einer Belichtung auf irgendeine Weise leuchtet.

Im Ergebnis kann die grafische Darstellung in Form beispielsweise eines Codes auf einem beliebigen Muster gedruckt werden. Teure UV-Code-Leser mit extrem schmalbandigen Filtern für das Remissionsspektrum sind dabei nicht mehr erforderlich.

Grundsätzlich kann die Beleuchtung der Substanz mit ganz unterschiedlichen Beleuchtungsquellen erfolgen. Hier kann beispielsweise in vorteilhafter Weise eine LED, Licht emittierende Diode, Laserdiode oder VCSEL, Vertical-Cavity Surface-Emitting Laser, verwendet werden. Bei der Auswahl der jeweiligen Lichtquelle ist auf den jeweiligen konkreten Anwendungsfall abzustellen.

In manchen Anwendungsfällen wird der Untergrund durch ein bewegtes, sich bewegendes oder bewegbares Objekt gebildet. Damit bewegt sich die grafische Darstellung mit dem Untergrund, beispielsweise ein als Code ausgebildete grafische Darstellung auf einem Objekt. Um eine Bewegungsunschärfe weitestgehend zu verhindern, sollte in einem solchen Fall das Zeitintervall der Belichtung nicht zu lange sein. Ebenfalls im Hinblick auf eine Verminderung oder Vermeidung einer Bewegungsunschärfe kann der Detektor während des Aufnehmens der Remission mittels eines Piezoelements bewegt bzw. dem bewegten oder sich bewegenden Objekt nachgeführt werden. Zur Kompensation einer Bewegungsunschärfe kann des Weiteren eine Flüssiglinse verwendet werden, insbesondere eine Flüssiglinse mit einer Tilt- oder Schwenkfunktion.

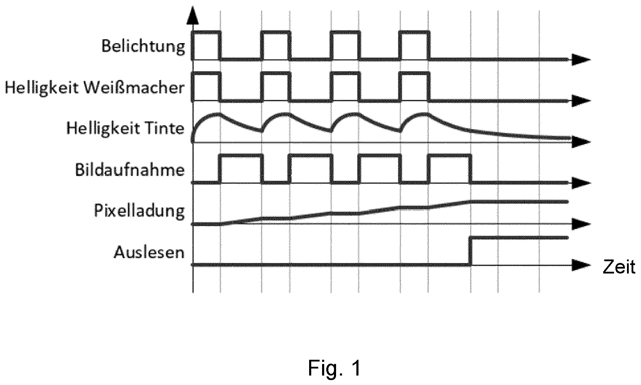

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele des erfindungsgemäßen Verfahrens sowie der erfindungsgemäßen Vorrichtung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert. In der Zeichnung zeigt die einzige
- Fig. 1: in einem Diagramm eine Erläuterung eines Ausführungsbeispiels des erfindungsgemäßen Verfahrens.

Fig. 1 zeigt in einem Diagramm den zeitlichen Verlauf - horizontale Achse - einer Belichtung, einer Helligkeit einer Remission eines Weißmachers, einer Helligkeit einer Remission einer Tinte, eines Aufnehmens von Remission, einer Pixelladung in einem Detektor und eines Auslesens bei einem Ausführungsbeispiel des erfindungsgemäßen Verfahrens zur Detektion einer auf einem Untergrund erzeugten grafischen Darstellung, wobei die grafische Darstellung mittels einer Substanz erzeugt ist, bei deren eine Remission durch die Substanz auch noch nach einer für die Detektion geeigneten und die Remission auslösenden Beleuchtung stattfindet. Die vertikale Achse steht dabei jeweils für eine Menge oder einen Vorgang, wie beispielsweise beim Auslesen.

Bei dem hier erläuterten Ausführungsbeispiel wird als Substanz zur Erzeugung der grafischen Darstellung in Form eines hier beispielhaft genannten Codes eine UV-Tinte verwendet, wobei die UV-Tinte auch noch nach einer Belichtung eine gewisse Zeit nachleuchtet. Der Code ist auf ein Papier gedruckt. Ein Weißmacher eines Papiers zeigt dieses Nachleuchten nicht. Oftmals ist die Helligkeit des Nachleuchtens jedoch gering, was die Detektion der grafischen Darstellungen erschwert. Insbesondere bei Umgebungsbedingungen, bei denen noch weitere Lichtquellen emittieren können, ist somit eine sichere Detektion des Codes nicht immer gewährleistet.

Mit dem hier erläuterten Ausführungsbeispiel ist jedoch auch bei wie oben erläutert erschwerten Umgebungsbedingungen eine sichere Detektion des Codes möglich. Dabei wird ausgenutzt, dass beispielsweise moderne Sensorchips Multishutter aufweisen, sodass eine grafische Darstellung in Form des Codes mehrfach belichtet werden kann, bevor sie ausgelesen wird. Dadurch kann die aufgenommene Helligkeit der Remission der Substanz des Codes oder der grafischen Darstellung akkumuliert und ein ausreichend hoher Kontrast und damit eine sichere Detektion des Codes oder der grafischen Darstellung erreicht werden.

Fig. 1 zeigt zur Erläuterung des Ausführungsbeispiels des Verfahrens einen beispielhaften Helligkeitsverlauf der UV-Tinte und des Weißmachers und einen Verlauf einer Ladungsakkumulation in einem Sensorchip über eine Bildaufnahme.

Während der Zeitintervalle der Belichtung des Codes oder der grafischen Darstellung, welche je nach Erfordernis variiert werden können, leuchtet der Weißmacher des Papiers und die UV-Tinte wird aktiviert. Sobald die Beleuchtung ausgeschaltet und damit die Belichtung beendet wird, emittiert der Weißmacher auch keine Helligkeit mehr. Die UV-Tinte hingegen leuchtet noch nach, wobei die Intensität des Nachleuchtens mit der Zeit - häufig exponentiell - abnimmt.

Die Bildaufnahme und damit das Aufnehmen der durch die Beleuchtung erzeugten Remission mittels eines Detektors findet bei diesem Ausführungsbeispiel strikt zeitversetzt zur Belichtung statt. Jedes Mal, wenn die Bildaufnahme aktiviert wird, ackumuliert jedes Pixel eines CCD-Sensors des Detektors die durch das eintreffende Licht der Remission erzeugte Ladung. Zur Aktivierung der Bildaufnahme wird beispielsweise der Shutter eines Sensorchips mit Multishutterfunktion geöffnet und damit dem eintreffenden Licht ausgesetzt. In den Zeitintervallen der Belichtung erfolgt keine Akkumulation der Ladung.

Nachdem mehrere Zeitintervalle der Belichtung - bei dem hier gezeigten Ausführungsbeispiel vier Zeitintervalle - durchlaufen sind, kann die Ladung der Pixel und damit das gesamte aufgenommene Bild ausgelesen werden.

Je nach Anwendungsfall und je nach Ausgestaltung der Vorrichtung können die folgenden Parameter variiert werden:
- Anzahl der Bildaufnahmen;
- Dauer der einzelnen Bildaufnahmen;
- Dauer der einzelnen Belichtungen oder Zeitintervalle, wobei bei einem Ausführungsbeispiel mehrere aufeinanderfolgende Zeitintervalle die gleiche Länge haben können und bei einem anderen Ausführungsbeispiel mehrere aufeinander folgende Zeitintervalle unterschiedliche Längen haben können;
- Versatz zwischen Bildaufnahme und Belichtung, wobei aufeinander folgende Bildaufnahmen und Belichtungen nicht zwingend exakt gegengetaktet sein müssen und ein teilweises Überlappen möglich ist.

Hinsichtlich weiterer vorteilhafter Ausgestaltungen des erfindungsgemäßen Verfahrens sowie der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. Verfahren zur Detektion einer auf einem Untergrund erzeugten grafischen Darstellung, wobei die grafische Darstellung mittels einer Substanz erzeugt ist, bei der eine Remission durch die Substanz auch noch nach einer für die Detektion geeigneten und die Remission auslösenden Beleuchtung stattfindet,
mit den folgenden Schritten:
- Belichten der grafischen Darstellung mit der Beleuchtung während eines vorgebbaren Zeitintervalls und
- Aufnehmen der durch die Beleuchtung erzeugten Remission mittels eines Detektors, wobei der Beginn des Aufnehmens mit oder nach dem Beginn des Zeitintervalls beginnt und nach dem Ende des Zeitintervalls endet,
wobei die grafische Darstellung während mehrerer vorgebbarer aufeinander folgender Zeitintervalle belichtet wird, wobei zwischen den Zeitintervallen Belichtungspausen vorgebbarer Zeitdauer zum Aufnehmen der Remission erfolgen und wobei das Aufnehmen in Belichtungspausen erfolgt,
**dadurch gekennzeichnet, dass** in den Belichtungspausen aufgenommene Remissionssignale im Detektor für die Detektion der grafischen Darstellung angesammelt werden.

2. Verfahren nach Anspruch 1, **dadurch gekennzeichnet, dass** die Substanz eine detektierbare Remission nur bei einer Beleuchtung mit Licht mit kürzeren Wellenlängen als das für den Menschen sichtbare Licht zeigt.

3. Verfahren nach Anspruch 1 oder 2, **dadurch gekennzeichnet, dass** die Substanz eine unter UV-Licht leuchtende Substanz oder Tinte ist.

4. Verfahren nach einem der Ansprüche 1 bis 3, **dadurch gekennzeichnet, dass** die Beleuchtung mittels UV-Licht erfolgt.

5. Verfahren nach einem der Ansprüche 1 bis 4, **dadurch gekennzeichnet, dass** die Remission ein Fluoreszenzlicht aufweist.

6. Verfahren nach einem der Ansprüche 1 bis 5, **dadurch gekennzeichnet, dass** das Aufnehmen nach dem Ende oder unmittelbar nach dem Ende des Zeitintervalls beginnt.

7. Verfahren nach einem der Ansprüche 1 bis 6, **dadurch gekennzeichnet, dass** das Aufnehmen ausschließlich in Belichtungspausen erfolgt.

8. Verfahren nach Anspruch 7, **dadurch gekennzeichnet, dass** das Aufnehmen während der gesamten Zeitdauern der Belichtungspausen erfolgt.

9. Verfahren nach einem der Ansprüche 1 bis 8, **dadurch gekennzeichnet, dass** ein Auslesen des Detektors nach dem Aufnehmen erfolgt.

10. Verfahren nach einem der Ansprüche 1 bis 9, **dadurch gekennzeichnet, dass** nur eine Remission oder Remissionen ausgelesen wird oder werden, die außerhalb eines Zeitintervalls oder von Zeitintervallen des Belichtens aufgenommen worden ist oder sind.

11. Verfahren nach einem der Ansprüche 1 bis 10, **dadurch gekennzeichnet, dass** der Detektor einen CCD-Sensor, eine CCD-Kamera oder einen Sensorchip mit Multishutter-Funktion aufweist.

12. Verfahren nach einem der Ansprüche 1 bis 11, **dadurch gekennzeichnet, dass** die grafische Darstellung flächig ausgebildet ist.

13. Verfahren nach Anspruch 12, **dadurch gekennzeichnet, dass** die grafische Darstellung auf einem als Papier ausgebildeten Untergrund ausgebildet ist.

14. Verfahren nach einem der Ansprüche 1 bis 13, **dadurch gekennzeichnet, dass** die grafische Darstellung einen Code, beispielsweise Barcode, QR-Code oder Data-Matrixcode, aufweist oder als ein solcher Code ausgebildet ist.

15. Vorrichtung zur Detektion einer auf einem Untergrund erzeugten grafischen Darstellung, nämlich zur Durchführung des Verfahrens nach einem der Ansprüche 1 bis 14, wobei die grafische Darstellung mittels einer Substanz erzeugt ist, bei der eine Remission durch die Substanz auch noch nach einer für die Detektion geeigneten und die Remission auslösenden Beleuchtung stattfindet, umfassend:
- Beleuchtungsmittel, die zum Belichten der grafischen Darstellung mit der Beleuchtung während eines vorgebbaren Zeitintervalls ausgebildet sind, und
- Aufnahmemittel, die zum Aufnehmen der durch die Beleuchtung erzeugten Remission mittels eines Detektors, wobei der Beginn des Aufnehmens mit oder nach dem Beginn des Zeitintervalls beginnt und nach dem Ende des Zeitintervalls endet, ausgebildet sind,
wobei die Beleuchtungsmittel und die Aufnahmemittel derart ausgebildet sind, dass die grafische Darstellung während mehrerer vorgebbarer aufeinander folgender Zeitintervalle belichtet wird, wobei zwischen den Zeitintervallen Belichtungspausen vorgebbarer Zeitdauer zum Aufnehmen der Remission erfolgen und wobei das Aufnehmen in Belichtungspausen erfolgt,
**dadurch gekennzeichnet, dass** die Aufnahmemittel derart ausgebildet sind, dass in den Belichtungspausen aufgenommene Remissionssignale im Detektor für die Detektion der grafischen Darstellung angesammelt werden.

## Claims

1. Method for detecting a graphic representation which is produced on a substrate, wherein the graphic representation is produced by means of a substance in which a remission by the substance still takes place even after an illumination which is suitable for the detection and which triggers the remission,
having the following steps of:
- exposing the graphic representation with the illumination during a predeterminable time period, and
- recording the remission produced by the illumination by means of a detector, wherein the beginning of the recording begins with or after the beginning of the time period and ends after the end of the time period,
wherein the graphic representation is exposed during a plurality of predeterminable sequential time periods, wherein between the time periods exposure pauses of a predeterminable duration are carried out in order to record the remission and wherein the recording is carried out in exposure pauses,
**characterised in that** remission signals which are recorded in the exposure pauses are collected in the detector for the detection of the graphic representation.

2. Method according to claim 1, **characterised in that** the substance shows a detectable remission only when illuminated with a light having shorter wavelengths than light visible to humans.

3. Method according to claim 1 or 2, **characterised in that** the substance is a substance or ink which glows under UV light.

4. Method according to any one of claims 1 to 3,
**characterised in that** the illumination is carried out by means of UV light.

5. Method according to any one of claims 1 to 4,
**characterised in that** the remission has a fluorescent light.

6. Method according to any one of claims 1 to 5,
**characterised in that** the recording begins after the end or directly after the end of the time period.

7. Method according to any one of claims 1 to 6,
**characterised in that** the recording is carried out exclusively in exposure pauses.

8. Method according to claim 7, **characterised in that** the recording is carried out for the entire durations of the exposure pauses.

9. Method according to any one of claims 1 to 8,
**characterised in that** a reading of the detector is carried out after the recording.

10. Method according to any one of claims 1 to 9,
**characterised in that** only a remission or remissions is/are read which has/have been recorded outside a time period or time periods of the exposure.

11. Method according to any one of claims 1 to 10,
**characterised in that** the detector has a CCD sensor, a CCD camera or a sensor chip having a multi-shutter function.

12. Method according to any one of claims 1 to 11,
**characterised in that** the graphic representation is formed in a planar manner.

13. Method according to claim 12, **characterised in that** the graphic representation is formed on a substrate which is in the form of paper.

14. Method according to any one of claims 1 to 13,
**characterised in that** the graphic representation has a code, for example, a bar code, QR code or data matrix code, or is in the form of such a code.

15. Apparatus for detecting a graphic representation which is produced on a substrate, that is to say, for carrying out the method according to any one of claims 1 to 14, wherein the graphic representation is produced by means of a substance in which a remission by the substance still takes place even after an illumination which is suitable for the detection and which triggers the remission,
comprising:
- illumination means which are constructed to expose the graphic representation with the illumination during a predeterminable time period, and
- recording means which are constructed to record the remission produced by the illumination by means of a detector, wherein the beginning of the recording begins with or after the beginning of the time period and ends after the end of the time period,
wherein the illumination means and the recording means are constructed in such a manner that the graphic representation is exposed during a plurality of predeterminable sequential time periods, wherein between the time periods exposure pauses of a predeterminable duration are carried out in order to record the remission and wherein the recording is carried out in exposure pauses,
**characterised in that** the recording means are constructed in such a manner that remission signals which are recorded in the exposure pauses are collected in the detector for the detection of the graphic representation.

## Revendications

1. Procédé de détection d'une représentation graphique générée sur un fond, dans lequel la représentation graphique est générée au moyen d'une substance, dans laquelle une réémission par la substance a lieu également après un éclairage adapté à la détection et déclenchant la réémission,
avec les étapes suivantes :
- éclairage de la représentation graphique avec l'éclairage pendant un intervalle de temps prédéterminé et
- enregistrement de la réémission générée par l'éclairage au moyen d'un détecteur, dans lequel le début de l'enregistrement commence avec ou avant le début de l'intervalle de temps et se termine après la fin de l'intervalle de temps,
dans lequel la représentation graphique est éclairée pendant plusieurs intervalles de temps prédéterminés successifs, dans lequel, entre les intervalles de temps, des pauses d'éclairage de durées prédéterminées ont lieu pour l'enregistrement de la réémission et dans lequel l'enregistrement a lieu lors des pauses d'éclairage,
**caractérisé en ce que** les signaux de réémission enregistrés lors des pauses d'éclairage sont collectés dans le détecteur pour la détection de la représentation graphique.

2. Procédé selon la revendication 1, **caractérisé en ce que** la substance présente une réémission détectable uniquement lors d'un éclairage avec une lumière avec des longueurs d'onde plus courtes que la lumière visible par l'être humain.

3. Procédé selon la revendication 1 ou 2, **caractérisé en ce que** la substance est une substance ou encre s'illuminant sous une lumière UV.

4. Procédé selon l'une des revendications 1 à 3, **caractérisé en ce que** l'éclairage a lieu à l'aide d'une lumière UV.

5. Procédé selon l'une des revendications 1 à 4, **caractérisé en ce que** la réémission comprend une lumière de fluorescence.

6. Procédé selon l'une des revendications 1 à 5, **caractérisé en ce que** l'enregistrement commence après la fin ou immédiatement après la fin de l'intervalle de temps.

7. Procédé selon l'une des revendications 1 à 6, **caractérisé en ce que** l'enregistrement a lieu exclusivement lors des pauses d'éclairage.

8. Procédé selon la revendication 7, **caractérisé en ce que** l'enregistrement a lieu pendant toutes les durées des pauses d'éclairage.

9. Procédé selon l'une des revendications 1 à 8, **caractérisé en ce que** la lecture du détecteur a lieu après l'enregistrement.

10. Procédé selon l'une des revendications 1 à 9, **caractérisé en ce que** seule une réémission ou des réémissions qui ont été ou sont enregistrées hors d'un intervalle de temps ou d'intervalles de temps d'éclairage est ou sont lues.

11. Procédé selon l'une des revendications 1 à 10, **caractérisé en ce que** le détecteur comprend un capteur CCD, une caméra CCD ou une puce de capteur avec une fonction multishutter.

12. Procédé selon l'une des revendications 1 à 11, **caractérisé en ce que** la représentation graphique présente une forme plane.

13. Procédé selon la revendication 12, **caractérisé en ce que** la représentation graphique est réalisée sur un fond conçu comme du papier.

14. Procédé selon l'une des revendications 1 à 13, **caractérisé en ce que** la représentation graphique comprend un code, par exemple un code barre, un QR-code ou un code Datamatrix ou est conçue comme un tel code.

15. Dispositif de détection d'une représentation graphique générée sur un fond, pour l'exécution du procédé selon l'une des revendications 1 à 14, dans lequel la représentation graphique est générée au moyen d'une substance, dans laquelle une réémission a lieu par la substance également après un éclairage adapté à la détection et déclenchant la réémission, comprenant :
- des moyens d'éclairage qui sont conçus pour l'éclairage de la représentation graphique avec l'éclairage pendant un intervalle de temps prédéterminé et
- des moyens d'enregistrement qui sont conçus pour l'enregistrement de la réémission générée par l'éclairage au moyen d'un détecteur, dans lequel le début de l'enregistrement commence avec ou après le début de l'intervalle de temps et se termine après la fin de l'intervalle de temps,
dans lequel les moyens d'éclairage et les moyens d'enregistrement sont conçus de sorte que la représentation graphique est éclairée pendant plusieurs intervalles de temps prédéterminés successifs, dans lequel, entre les intervalles de temps, des pauses d'éclairage de durées prédéterminées ont lieu pour l'enregistrement de la réémission et dans lequel l'enregistrement a lieu lors des pauses d'éclairage,
**caractérisé en ce que** les moyens d'enregistrement sont conçus de sorte que les signaux de réémission enregistrés lors des pauses d'éclairage sont collectés dans le détecteur pour la détection de la représentation graphique.
